# EUROPEAN PATENT APPLICATION

(11) **EP 4 815 246 A1**
(43) Date of publication of application: **30.09.2026**
(21) Application number: 25166249.0
(22) Date of filing: 26.03.2025
(51) Int. Cl.: H02J 3/38, H02J 13/00

(54) **COMPUTER-IMPLEMENTED METHOD FOR OPTIMIZING AND CONTROLLING OF OPERATION OF A MICRO GRID**

(71) Applicant: ABB SCHWEIZ AG, 5400 Baden (CH)
(72) Inventor: LAURICELLA, Marco, 68199 Mannheim (DE); PRIMAS, Bernhard, 68167 Mannheim (DE); SCHLOEDER, Matthias, 69126 Heidelberg (DE); BISKOPING, Matthias, 69493 Hirschberg (DE)
(74) Representative: Maiwald GmbH

(57) **Abstract**

The present invention relates to a computer-implemented method (100) for optimizing and controlling operation of a micro grid (10) comprising of an energy-management-system EMS (20) comprising a primary control system (22), a secondary control system (24) and a tertiary control system (26), comprising:
- collecting (102) first state information (30) of the micro grid (10), by the EMS (20), and transmitting the first state information (30) to the tertiary control system (26);
- optimizing (104), by the tertiary control system (24), a performance parameter (34) of the micro grid (10) in a first periodic time point by using the first state information (30) to schedule an energy exchange between the micro grid (10) and a main grid (5) over a defined time horizon;
- collecting (106), by the EMS (20), second state information (35) of the micro grid (10) from at least one sensing device (40) connected to the micro grid (10), within a second periodic time point and transmitting the second state information (35) to the secondary control system (24) to execute an optimal control plan provided by the tertiary control system (26) or to adjust the optimal control plan provided by the tertiary control system (26);
- generating (108), by the EMS (20), a data structure (42) of most probable events that can happen and assigning the these most probable events at least one control strategy (45) provided by the EMS (20);
- determining (110), by the EMS (20), at least one probability (44) for each of these most probable events the determined data structure (42), and
- selecting (112), after an unexpected event (43) occurred, by the EMS (20), the at least one control strategy (45) provided by the EMS (20) that corresponds to the event with the highest probability and to perform the selected control strategy (45) after the unexpected event occurred.

## Description

### FIELD OF THE INVENTION

The present invention relates to computer-implemented method for optimizing and controlling of operation of a micro grid.

### BACKGROUND OF THE INVENTION

Microgrids are localized groups of energy generation, consumption and storage units that can operate independently or in conjunction with the main power grid. Microgrids allow an increase in decentralization of energy production and consumption, and they play an important role in enhancing the penetration and integration of renewable energy sources.

By properly managing energy production and consumption locally, in a decentralized fashion, more renewable energy sources can be incorporated while reducing the stress on the main grid and, potentially, reducing transmission losses. Such results are usually achieved by combining energy storage systems, like batteries, with energy management systems, allowing a microgrid to store excess energy generated during periods of peak production, and to use it at a later stage when the demand increases. This provides a stabilizing effect both to the microgrid and to the main grid to which it is connected.

Advanced and sophisticated energy management systems are required to ensure stability and resilience of microgrids in the presence of intermittent, variable, and unpredictable renewable energy sources. The energy management systems play a crucial role in optimizing the operation of microgrids by managing the generation, storage, and consumption of energy in real-time, and by providing optimal day-ahead generation and consumption strategies, allowing participation in the day-ahead energy market and lowering energy cost. The real-time control is usually done by a system called secondary control. The WO 2021501720A1 or the US 20200272118A1 provide examples for an energy management system (EMS) known in the prior art.

Optimal energy management solutions bring additional advantages, including an increase in efficiency and reliability, a decrease in energy cost through a better use of cheap renewable energy, thus providing environmental benefits with reduced greenhouse gas emissions and reliance on fossil fuels.

However, energy management systems still face some challenges. The coordination of multiple internal assets, whose parameters and behavior are only partially known or predictable, requires significant expertise and effort. Moreover, energy management systems require regular maintenance, in particular to keep track of changes in the operational parameters of assets, due for example to ageing, faults, etc. Finally, forecasting the future behavior of uncontrolled variables like energy consumption and renewable energy generation pose a significant challenge, and deviations from the forecasted behavior could negatively impact the energy management system performance, which could lead to increasing costs, and decreasing stability and reliability of the microgrid.

Nowadays, energy management systems include advanced optimization techniques, artificial intelligence, and energy generation and demand forecast, which enables both long-term planning and real-time decision-making to enhance the efficiency and reliability of microgrids. However, resilience and adaptation to sudden changes remains an open challenge, including optimal reaction of the secondary control system to assets unavailability, shifts in internal parameters, or significant deviations of unpredictable and uncontrollable consumption and generation from the baseline or from their forecasted values.

Further, energy management system (EMS), including tertiary control, secondary control (SC), and primary control, are often used in microgrids to optimally manage energy generation, storage and consumption, and to properly coordinate local assets like batteries and energy generation units, both from a day-ahead planning and real-time control perspective.

EMSs are usually based on a set of data or information related to each specific microgrid, like topology, available assets, and their nominal parameters, forecast of local energy consumption generation based on renewable sources, etc. Based on these data, the EMS usually computes the optimal day-ahead energy strategy (e.g., a schedule of energy use and consumption balances over 24 hours with 15 minutes resolution), whose optimality depends on the availability of all microgrid assets and on the accuracy of the nominal parameters used during setup.

The performance of microgrid EMS is significantly influenced by forecast accuracy, battery health estimation and control, and the availability of microgrid assets. Moreover, usually SC strategies are not optimized to react to specific events or sudden changes in the microgrid assets and are not automatically adapted to the current microgrid conditions.

There is a need to address these issues.

### SUMMARY OF THE INVENTION

Therefore, it would be advantageous to provide an improved concept for an improved and automated optimizing and controlling operation of a micro grid comprising of an energy-management-system EMS.

The object of the present invention is solved by the subject matter of the independent claims, wherein further embodiments are incorporated in the dependent claims.

In a first aspect of the present invention, there is provided a computer-implemented method for optimizing and controlling operation of a micro grid comprising of an energy-management-system EMS comprising a primary control system, a secondary control system and a tertiary control system, comprising the steps:
- collecting first state information of the micro grid, by the EMS, and transmitting the first state information to the tertiary control system;
- optimizing, by the tertiary control system, a performance parameter of the micro grid in a first periodic time point by using the first state information to schedule an energy exchange between the micro grid and a main grid over a defined time horizon;
- collecting, by the EMS, second state information of the micro grid from at least one sensing device connected to the micro grid, within a second periodic time point and transmitting the second state information to the secondary control system to execute an optimal control plan provided by the tertiary control system or to adjust the optimal control plan provided by the tertiary control system;
- generating, by the EMS, a data structure of most probable events that can happen and assigning to these most probable events at least one control strategy provided by the EMS;
- determining, by the EMS, at least one probability for each of these most probable events of the determined data structure, and
- selecting, after an unexpected event occurred, by the EMS, the at least one control strategy provided by the EMS that corresponds to the event with the highest probability and to perform the selected control strategy after the unexpected event occurred.

In other words, an important aspect of the present invention in a general manner is to perform online and / or continuous adaptation of a secondary and tertiary control of an EMS based on a pre-defined rule applied to collected data and on the automated analysis of the micro grid conditions, including an estimation of the probability of changes and events to happen.

This is achieved by addressing the following technical aspects as possible parts of the technical solution of the present invention:
In a first possible aspect, performing online adaptation of secondary and / or tertiary control, i.e., of the (internal) parameters and/or its microgrid structure, to avoid a loss of optimality of the planned energy strategy, e.g. day-ahead planning, and of the real-time control when the microgrid is subject to changes in assets availability or internal parameters, or to sudden events (e.g. a significant deviation from the expected behavior of assets or of energy generation / consumption, faults, blackouts, etc.).

In a second possible aspect, providing a usage of a so-called "idle time" between different runs of the EMS / tertiary control, e.g. once every 15 minutes with 90 seconds of running time, to analyze historical data and current microgrid conditions, e.g. response to events, changes, etc., and compute the required "adaptation step" of tertiary / secondary control to improve their performance, based on collected data of events and/or user provided scenarios.

In a third possible aspect, providing maintaining of a defined data structure, for example, a list (microgrid-internal or microgrid-external) of possible events and / or a decision tree of possible events, changes (i.e., scenarios) with the estimated probability of that possible event to occur or happen in the close future or within a certain time frame in the future (e.g. the next 2 hours). Such a list or decision tree length can then for example be limited to a maximum number of elements, e.g., by keeping only the N events that are more likely to happen in the close future.

In a fourth possible aspect, providing a change of secondary control parameters of the secondary control and/or algorithmic structure based on the previous aspects, adapting it to condition changes or improving the response strategy to unforeseen events.

In a fifth possible aspect, providing a change of tertiary control internal parameters based on the aforementioned technical aspects, adapting it to condition changes, or improving the amount of internal energy reserve conserved as buffer to react to sudden events.

In this manner, the following challenges are addressed in an advantageous manner when implementing the present invention:
- Accurate forecasting of energy demand and renewable energy generation, including and estimation of the probability of significant deviations and their amplitude of the behavior of the to-be monitored and controlled microgrid.
- Accurate estimation of battery state of charge and health of the devices as part of the microgrid, which is crucial to ensure availability of the correct amount of energy reserve and its readiness to be deployed when needed.
- Continuous monitoring of assets of the micro grid availability, including generators and storage systems, and real-time reaction to faults, malfunctions and changes in assets behavior and/or internal parameters.
- Design of control methods that can optimally react to sudden changes in the microgrid, deviations or other events preserving the stability of the microgrid and the optimality of the energy dispatch.

The present invention also provides the following advantages:
- Improved resilience and robustness of microgrid EMS solutions (i.e., combination of tertiary and secondary microgrid control systems).
- Automatic tuning / adaptation of tertiary and secondary control during their operation without the need of a maintenance intervention or of specific inputs from engineers / operators.
- Improved use of internal energy storage to increase flexibility and reliability based on probabilistic based optimization.

In this respect, the following definition are provided to be used in the context of the present invention:
- Event:
   The term event is used to describe a sudden (or slow) change in operating conditions or deviation from what is expected from the system in terms of its behavior, and that of all its components. What constitutes an event technically can then be described in various ways, and an "event is happening" condition can be triggered using different rules, for example: a threshold on the value of a time-varying quantity, and/or a threshold on its derivative (i.e. speed of change over time) can be pre-defined and it can trigger an event when violated; a threshold on the difference between two quantities (e.g. the internal renewable energy generation and its previously forecasted value) and/or a threshold on its derivative (i.e. speed of change over time of the difference between the quantities) can trigger an event when violated; the simulated behavior of an asset (e.g. battery, diesel generator, etc.) deviates from the measured one more than a pre-defined threshold.
   We distinguish between two types of events: Probable events and unexpected events. Probable events are pre-defined events that are known in advance and are considered likely to occur in practice. These events are stored and managed in a dedicated data structure within the inventive method. Unexpected events, on the other hand, are events that occur suddenly during operations. They are typically different from the pre-defined probable events and are not anticipated in advance.
- Heuristics:
   Rule-based method to quickly compute a control action based on a parametrized algorithm, that efficiently approximates the optimal solution of a complex problem by means of a simplified model or of a simple structured set of rules.
- Decision tree:
   Hierarchical model used for quick decision making, consisting of nodes (i.e. decision point) where a simple instruction is run (e.g. comparing a measured value with a predefined threshold) and based on the (binary) result one of two (or more) branches is selected, moving to the following node along that branch, until the last node is reached which contains an instruction to be implemented.

According to an example, the method includes a step of adapting of at least one control parameter of the secondary control system and / or the tertiary control system based on the first state information and / or the second state information. In this way, an efficient and accurate control of the operation of the microgrid can be ensured.

According to an example, the method comprises the step of adapting the at least one control parameter includes the step of analyzing of the second state information and / or the data structure and compute, if a control parameter threshold is fulfilled, an updated control parameter of the secondary control system and / or the tertiary control system that replaces the current control parameter of the secondary control system and / or the tertiary control system. In this way, an efficient and accurate control of the operation of the microgrid can be ensured.

According to an example, the first state information comprises of historical data from a database that relate to state of the microgrid in the past. In this way, an efficient and accurate control of the operation of the microgrid can be ensured.

According to an example, the step of collecting is at least partly performed by the primary control system.

According to an example, the step of optimizing the performance parameter uses at least partly a forecasting algorithm. In this way, an efficient and accurate control of the operation of the microgrid can be ensured.

According to an example, the data structure is at least one of the following: a list of events, a decision tree. In this way, an efficient and accurate control of the operation of the microgrid can be ensured.

According to an example, the step of determining of at least one probability is performed during an idle time of the tertiary control system. In this way, an efficient and accurate control of the operation of the microgrid can be ensured.

According to an example, the step of determining of at least one probability is performed by at least one of the following: by comparing the first state information and the second state information, by monitoring a behavior of the microgrid and detecting a deviation of the monitored behavior of the microgrid behavior from a defined behavior of the microgrid over a defined time horizon. In this way, an efficient and accurate control of the operation of the microgrid can be ensured.

In a second aspect of the present invention, a data processing device is provided comprising means for carrying out the method of any one of the previous examples.

In a third aspect of the present invention, a computer program is provided comprising instructions which, when the program is executed by a computer, cause the computer to carry out the steps of the method of any one of the previous examples.

In a fourth aspect of the present invention, a computer-readable medium is provided comprising instructions which, when executed by a computer, cause the computer to carry out the method according to any one of the previous examples.

### BRIEF DESCRIPTION OF THE DRAWINGS

Exemplary embodiments will be described in the following with reference to the following drawings:
Fig. 1 illustrates a schematic computer-implemented method for optimizing and controlling operation of a micro grid comprising of an energy-management-system EMS according to an embodiment of the present invention;
Fig. 2 illustrates a schematic computer-implemented method step for optimizing and controlling operation of a micro grid comprising of an energy-management-system EMS according to an embodiment of the present invention;
Fig. 3 illustrates a schematic computer-implemented method of adapting a control parameter of a secondary control according to an embodiment of the present invention.

### DETAILED DESCRIPTION OF THE DRAWINGS

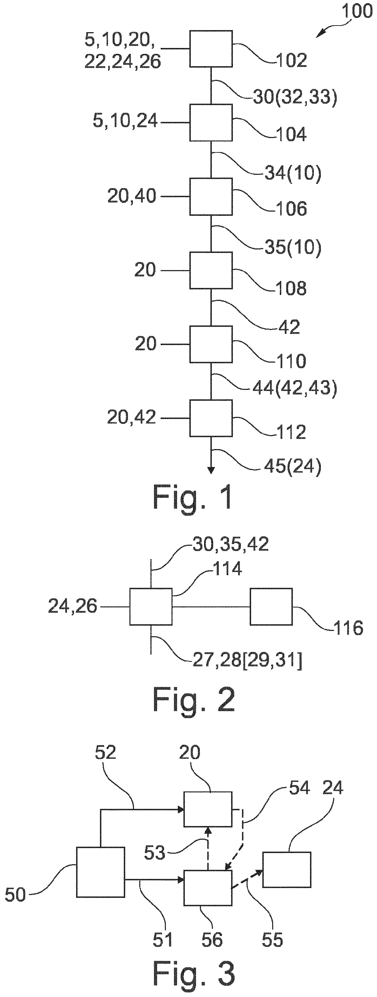

Fig. 1 illustrates a schematic computer-implemented method 100 for optimizing and controlling operation of a micro grid 10 comprising of an energy-management-system EMS 20, wherein the EMS 20 comprising a primary control system 22, a secondary control system 24 and a tertiary control system 26, comprising the following steps:
In a first step 102, collecting first state information 30 of the micro grid 10, by the EMS 20 is performed, and the first state information 30 is transmitted to the tertiary control system 26.

Optionally, the step of collecting 102 may at least partly be performed by the primary control system 22.

Optionally, the first state information 30 may also comprise of historical data 32 that relate to state of the micro grid 10 in the past from a database 33 connected to the EMS.

In a second step 104, optimizing, by the tertiary control system 24, of a performance parameter 34 of the micro grid 10 in a first periodic time point is performed by using the first state information 30 to schedule an energy exchange between the micro grid 10 and a main grid 5 over a defined time horizon.

Optionally, the step of optimizing 104 the performance parameter 34 uses at least partly a forecasting algorithm.

In a third step 106, collecting, by the EMS 20, of second state information 35 of the micro grid 10 from at least one sensing device 40, e.g. a sensor, connected to the micro grid 10 is performed, within a second periodic time point and the second state information 35 is transmitted to the secondary control system 24 to execute an optimal control plan provided by the tertiary control system 26 or to adjust the optimal control plan provided by the tertiary control system 26.

In a fourth step 108, generating, by the EMS 20, a data structure 42 of most probable events that can happen and assigning to these most probable events at least one control strategy 45 provided by the EMS 20.

Optionally, the data structure 42 is at least one of the following: a list of events, a decision tree, or any other suitable data structure.

In a fifth step 110, determining, by the EMS 20, of at least one probability 44 for each of these most probable events of the determined data structure 42 is performed.

Optionally, the step of determining 110 of at least one probability 44 is performed during an idle time of the tertiary control system 26.

Optionally, the step of determining 110 of at least one probability 44 is performed by at least one of the following: by comparing the first state information 30 and the second state information 35, by monitoring a behavior of the micro grid 19 and detecting a deviation of the monitored behavior of the micro grid 10 behavior from a defined behavior of the micro grid 10 over a defined time horizon.

In a sixth step 112, selecting, after an unexpected event 43 has occurred, by the EMS 20, the at least one control strategy 45 that corresponds to the event with the highest probability and to perform the selected control strategy 45 after the unexpected event 43 occurred. The at least one control strategy 45 is provided by the EMS 20, e.g. from a predefined list of available control strategies that is stored in the EMS 20 or that is obtained by the EMS 20 from a storing device that is connected to the EMS 20.

Optionally, and as shown in the schematic Fig. 2 in detail, a step 114 of adapting of at least one control parameter 27, 28 of the secondary control system 24 and / or the tertiary control system 26 is provided which is based on the first state information 30 and / or the second state information 35.

Optionally, and as shown in the schematic Fig. 2 in detail, the step 114 of adapting the at least on control parameter 27, 28 includes the step of analyzing 116 of the second state information 35 and/or the data structure 42 and compute, if a control parameter threshold is fulfilled, an updated control parameter 29, 31 of the secondary control system 24 and / or the tertiary control system 26 that replaces the current control parameter 27, 28 of the secondary control system 24 and / or the tertiary control system 26.

In the following, further aspects and ideas of the present invention are described in detail to support understanding the present invention:
The present invention provides a solution for optimizing and controlling an operation of a micro grid that comprises of an energy-management-system EMS 20. The EMS 20 comprises a primary control system 22 which can be regarded as an energy resource that can process energy in various manners such as storing, consuming, providing energy, e.g. such as a diesel generator or the like, and operates in a high frequency regarding current and voltage, a secondary control system 24 and a tertiary control system 26.

Further, the present invention achieves the aforementioned advantages by using the following technical features:
- Probability-based adaptation of a data structure, e.g. an event list / a decision tree to most probable N events.
- Use of most-probable events to adapt the microgrid internal energy storage to improve the resilience to sudden changes.
- Automatically adapt parameters of the secondary control 24 / tertiary control system 26 to a current grid situation based on collected data, probabilistic decision tree, and analysis of past performance, e.g. by using numerical optimization or a neural network model to provide the new / best parameter values for secondary / tertiary control based on a set of input data and on a pre- defined algorithm / strategy.

The proposed invention refers to a method to adapt the tertiary and secondary microgrid control systems, i.e., the energy management systems and the real-time controller, to optimally react to parameter changes and unforeseen events, as unavailability of assets, significant deviations from forecasts, etc.

In order to achieve such an optimized controlling or operation of the microgrid, the following steps are performed:
- A set of predefined secondary control algorithms, e.g., rule-based heuristics, neural network-based strategy, decision tree-based control, gain scheduling control, etc., with potentially one dedicated control method for each element of a pre-defined set of events. e.g., faulty asset, forecast error, asset's health degradation, assets model/parameter changes, are used.
- A defined data structure, e.g., a fixed-length list, a decision tree containing the N most probable events that can happen in the near future (e.g. 2 hours), is used to identify the most probable events in a certain time horizon in the future.
- The present method estimates the probability of a certain set of events to happen in the near future.
- The present method is run during the computation unit "idle time" i.e., between two consecutive runs / execution of the numerical optimization problem constituting the core of the tertiary control / EMS and computes the optimal value of the internal parameters of secondary / tertiary control.
- The present method uses an algorithmic method to compute the optimal values of the internal parameters 27, 28 of secondary control 24 / tertiary control 26, or to select which is the best secondary control strategy based on the available set of control algorithms. Such computation method receives as input both historical data and data on the current internal microgrid conditions and uses a pre-defined strategy to compute the parameter values e.g. using an optimization method combined with the analysis of historical data containing the microgrid behavior during pre-occurred events.
- The present method and the corresponding system compares the current situation to the list of possible future events, and if required triggers an adaptation of the secondary / tertiary control parameters based on the results of the previous steps.

In a possible further example of the present invention, the method may be further implemented by the following steps S1 to S8 which are described in the following in detail:
Steps S1 to S3 refer to normal operations of tertiary and secondary control:
S1: Collecting data on energy price, load and generation forecast, measurements of microgrid internal state. Maintain a database with historical data collected over time during normal operations of tertiary control 26.
S2: At fixed time intervals, e.g., every 10 or 15 minutes) solve a numerical optimization problem to schedule the energy exchange with the main grid 5, internal load, generation and energy storage over a fixed or defined time horizon, e.g. 24 hours, to minimize energy cost.
S3: In real-time, e.g., every 10 milliseconds, the secondary control system 24 collects the microgrid states from the installed sensors and sends control inputs to the microgrid internal assets to follow an optimal plan generated by the EMS 20.

Steps S4 to S6 refer to a continuous monitoring and probability estimation:
S4: Preferably, idle time is used between EMS runs to analyze historical data and current and determined microgrid state conditions, comparing current state conditions / behavior to normal operations to identify, if an event is occurring or estimating the probability of events to happen in the future.
S5: Based on the estimated probabilities obtained from step S4, continuously maintain a data structure, e.g., a list of events or a decision-tree of N most probable events that can happen, where N is the pre-defined length of such list or decision tree.
S6: When an event is occurring and it is recognized by step S4, apply the most-fitting secondary control strategy selected from the set of available strategies as the one being the closest match to tackle the most probable event from the list of step S5.

Steps S7 to S8 refer to (optional) adaption of control parameters of the secondary control 24 / tertiary control 26.
S7: Use idle time between EMS runs to analyze recent data collected form the microgrid and the list of possible events obtained from step S5, then compute, if necessary, the updated values of the parameters of the secondary control system 24 / tertiary control system 26.
S8: If an event occurred recently or if the updated control parameters from step S7 are sufficiently different form the previous ones, perform the adaption step by replacing the parameters of the secondary control / tertiary control with the new values.

These aforementioned steps S1 to S8 are explained in the following and depict the technical content as described before in another greater detail to understand the various aspects of the present invention:
During a normal operation of a microgrid Energy Management System (EMS) 20 composed of a primary control system 22, a secondary control system 24 and tertiary control system 26 for periodic energy optimization and of the secondary control system 24 for real-time control, the steps S1, S2 and S3 are usually performed.

In particular, the computation unit used to run the tertiary control has an internal clock that triggers the execution of the numerical optimization problem constituting the core of the EMS 20 periodically, every fixed time interval of pre-defined length (e.g. 15 minutes). The computation unit then runs for the time required to solve the assigned problem (e.g., 90 seconds) and stays idle for the rest of a defined time interval. In between two time intervals, unexpected events can occur, and the secondary control system 24 intervenes to manage the ongoing event, which will cause it to deviate from the pre-defined optimal trajectory computed by the tertiary control system 26.

As mentioned before, the present invention proposes to use the idle time of the tertiary control computation unit 26 to perform two tasks:
a) analyze current operating conditions, estimate the probability of unexpected events to happen, monitor assets behavior to identify if it is changing over time from the expected one
b) adapt the internal parameters of the tertiary control system 26 and/or secondary control system 24 based on the observed microgrid conditions, to ensure that the control systems performance do not degrade over time as the operating conditions change (e.g., due to ageing of assets, faults, etc.).

To achieve this goal, a system composed of a memory and a computing unit may be used to store a list of fixed length N of events that could unexpectedly happen within a future horizon of length H. A decision tree tuned on signals measured from the microgrid, e.g. battery state of charge, generated energy, consumed energy, fuel flowrate to a diesel generator, etc., is then used to quickly pick a scenario (or an event category, e.g. fault of the battery system) from the elements of the event list, when a sudden event is happening and a trigger is raised by S4.

An automated routine periodically updates the list of possible events, and adapts the decision tree, e.g., by keeping in the list only the N most probable events generated by step S4 (step that estimate the probability of events over the horizon of length H).

A simple example of a decision tree may be as following: For this example, the battery behavior of a device in the micro grid 10 is monitored. If the deviation between the power delivery request by the secondary control and the actually delivered one is higher than a threshold, and if the expected battery state of charge deviates from the measured one more than a pre-defined limit, then the "faulty battery" secondary control mode is selected, otherwise the "normal operations" one is executed.

Once step S4 recognizes that an event is ongoing, and raises a trigger, step S6 uses the decision tree to select which event is most likely to be happening, which then trigger a switch within the secondary control to stop using the normal operations control rule, and to switch to one of the pre-defined control rules to deal with the ongoing event, e.g. a specific rule is defined to redistribute the energy generation and consumption, schedule if the battery fails, with specific parameters; a different control rule can be defined to manage the microgrid in islanding mode if the main grid fails, i.e. blackout, to keep the microgrid operating, having a different algorithm with different tunable parameters).

During an event, and after an event has occurred, step S7 analyzes past data of microgrid operation and the performance of the secondary and tertiary control systems and computes the parameter values for the controllers to deal with the unexpected event. This includes the parameters of the tertiary control system 26, and those of all control strategies implemented within the secondary control system 24, i.e., normal operations control, and specific rule-based control for e.g. battery faults, etc.

If the parameter variation or the corresponding variation in control performance is greater than a pre-defined threshold value, then those parameters are used to update the tertiary and secondary control system, thus performing an adaptation step of the control systems, step S8.

An example of the flow diagram for updating control parameters update for the secondary control system 24 and the tertiary control system 26 is provided on basis of Figure 3:
It is assumed that a set of data 50, e.g. a collection of the measured and current microgrid state data, of past data stored in an (internal) database, of forecast of energy generation and consumption data, and event state data provided by step S4, are given as input (see data flows 51 and 52 in Fig. 3 for example) both to a special instance of the optimization problem being the core of the EMS 20 / tertiary control system 26, and to the parameter adaptation method (see box 56 in Fig. 3). The EMS special instance 20 computes the strategy 54 to control the microgrid during the occurrence of the event specified by the event state input.

The adaptation method (see box 56 in Fig. 3), then compares the results of such optimization to those provided by the use of the currently implemented instance of the secondary control system 24 and tertiary control system 26.

Such algorithm could be for example a rule-based heuristic, a linear or nonlinear interpolation model, a neural network trained on a pre-defined set of conditions during the system installation. The updated parameter values are then communicated to the control systems and stored internally overriding the previous values. This step S8 constitutes the secondary and tertiary control systems adaptation step.

### Reference signs

- 5: Main grid
- 10: Micro grid
- 20: Energy-management system (EMS)
- 22: Primary control system
- 24: Secondary control system
- 26: Tertiary control system
- 27, 28: Current control parameter
- 29, 31: Updated / adjusted control parameter
- 30: First state information
- 32: Historical data
- 33: Database
- 34: Performance parameter
- 35: Second state information
- 40: Sensing device
- 42: Data structure
- 43: Unexpected event
- 44: Probability of occurrence of an unexpected event
- 45: Control strategy of the secondary control system
- 50: Provided data
- 51: Data flow 1
- 52: Data flow 2
- 53: Parameter adaption
- 54: Optimal control strategy
- 55: Parameter adaption
- 56: Adaption of parameters

- 100: Method
- 102: Collecting
- 104: Optimizing
- 106: Collecting
- 108: Generating
- 110: Determining
- 112: Selecting
- 114: Adapting
- 116: Analyzing

## Claims

1. A computer-implemented method (100) for optimizing and controlling operation of a micro grid (10) comprising of an energy-management-system EMS (20) comprising a primary control system (22), a secondary control system (24) and a tertiary control system (26), comprising:
- collecting (102) first state information (30) of the micro grid (10), by the EMS (20), and transmitting the first state information (30) to the tertiary control system (26);
- optimizing (104), by the tertiary control system (24), a performance parameter (34) of the micro grid (10) in a first periodic time point by using the first state information (30) to schedule an energy exchange between the micro grid (10) and a main grid (5) over a defined time horizon;
- collecting (106), by the EMS (20), second state information (35) of the micro grid (10) from at least one sensing device (40) connected to the micro grid (10), within a second periodic time point and transmitting the second state information (35) to the secondary control system (24) to execute an optimal control plan provided by the tertiary control system (26) or to adjust the optimal control plan provided by the tertiary control system (26);
- generating (108), by the EMS (20), a data structure (42) of most probable events that can happen and assigning to these most probable events at least one control strategy (45) provided by the EMS (20);
- determining (110), by the EMS (20), at least one probability (44) for each of these most probable events of the determined data structure (42), and
- selecting (112), after an unexpected event (43) occurred, by the EMS (20), the at least one control strategy (45) provided by the EMS (20) that corresponds to the event with the highest probability and to perform the selected control strategy (45) after the unexpected event occurred.

2. The method (100) according to claim 1, including a step (114) of adapting of at least one control parameter (27, 28) of the secondary control system (24) and / or the tertiary control system (26) based on the first state information (30) and / or the second state information (35).

3. The method (100) according to claim 2, wherein the step (114) of adapting the at least on control parameter (27, 28) includes the step of analyzing (116) of the second state information (35) and/or the data structure (42) and compute, if a control parameter threshold is fulfilled, an updated control parameter (29, 31) of the secondary control system (24) and / or the tertiary control system (26) that replaces the current control parameter (27, 28) of the secondary control system (24) and / or the tertiary control system (26).

4. The computer-implemented method (100) according to one of the previous claims, wherein the first state information (30) comprises of historical data (32) from a database (33) that relate to state of the micro grid (10) in the past.

5. The computer-implemented method (100) according to one of the previous claims, wherein the step of collecting (102) is at least partly performed by the primary control system (22).

6. The computer-implemented method (100) according to one of the previous claims, wherein the step of optimizing (104) the performance parameter (34) uses at least partly a forecasting algorithm.

7. The computer-implemented method (100) according to one of the previous claims, wherein the data structure (42) is at least one of the following: a list of events, a decision tree.

8. The computer-implemented method (100) according to one of the previous claims, wherein the step of determining (110) of at least one probability (44) is performed during an idle time of the tertiary control system (26).

9. The computer-implemented method (100) according to one of the previous claims, wherein the step of determining (110) of at least one probability (44) is performed by at least one of the following: by comparing the first state information (30) and the second state information (35), by monitoring a behavior of the micro grid (19) and detecting a deviation of the monitored behavior of the micro grid (10) behavior from a defined behavior of the micro grid (10) over a defined time horizon.

10. A data processing device comprising means for carrying out the method of any one of the claims 1 to 9.

11. A computer program comprising instructions which, when the program is executed by a computer, cause the computer to carry out the steps of the method of any one of the claims 1 to 9.

12. A computer-readable medium comprising instructions which, when executed by a computer, cause the computer to carry out the method according to any one of the claims 1 to 9.
